# EUROPÄISCHE PATENTSCHRIFT

(11) **EP 1 915 325 B1**
(45) Veröffentlichungstag und Bekanntmachung des Hinweises auf die Patenterteilung: **11.03.2009**
(21) Anmeldenummer: 06776479.5
(22) Anmeldetag: 28.07.2006
(51) Int. Cl.: C04B 7/345, C04B 28/18

(54) **VERFAHREN ZUR HERSTELLUNG VON BELIT-BINDEMITTEL**
BELITE-BASED BINDER PRODUCTION METHOD
PROCEDE POUR PRODUIRE UN LIANT A BASE DE BELITE

(30) Priorität: 10.08.2005 DE 102005037771
(43) Veröffentlichungstag der Anmeldung: 30.04.2008
(73) Patentinhaber: Forschungszentrum Karlsruhe GmbH, 76133 Karlsruhe (DE)
(72) Erfinder: STEMMERMANN, Peter, 76149 Karlsruhe (DE); GARBEV, Krassimir, 76344 Eggenstein-Leopoldshafen (DE); SCHWEIKE, Uwe, 76185 Karlsruhe (DE); BEUCHLE, Günter, 76185 Karlsruhe (DE)
(86) Internationale Anmeldenummer: PCT/EP2006/007475
(87) Internationale Veröffentlichungsnummer: WO 2007/017142

(56) Entgegenhaltungen:
- GUERRERO A ET AL: "EFFECT OF THE STARTING FLY ASH ON THE MICROSTRUCTURE AND MECHANICAL PROPERTIES OF FLY ASH-BELITE CEMENT MORTARTS" CEMENT AND CONCRETE RESEARCH, PERGAMON PRESS, ELMSFORD, NY, US, Bd. 30, 2000, Seiten 553-559, XP008073787 ISSN: 0008-8846 in der Anmeldung erwähnt
- BUTT J M ET AL: "DIE BEDINGUNGEN FÜR DIE BILDUNG VON KALZIUMHYDROSILIKATEN UND DEREN EIGENSCHAFTEN" SILIKATTECHNIK, VERLAG FUER BAUWESEN, BERLIN, DE, Bd. 12, 1961, Seiten 281-287, XP008073796 ISSN: 0037-5233 in der Anmeldung erwähnt

## Beschreibung

Die Erfindung betrifft ein Verfahren zur Herstellung von Belit-Bindemittel. Belit-Bindemittel enthält reaktives Dicalcium-Silikat wie z. B. β-C₂S Belit und ist hydraulisch aktiv, d. h. er härtet mit Wasser aus.

In diesem Dokument wird die übliche *Zement-Notation* verwendet, bei der C für CaO, S für SiO₂ H für H₂O, A für Al₂O₃ und F für Fe₂O₃ stehen. In dieser Notation wird z. B. das β-Dicalcium-Silikat Belit durch β-C₂S dargestellt, da dessen Molverhältnis Ca:Si ein Wert von 2:1 aufweist, was in herkömmlicher Notation [CaO]₂· [SiO₂]= Ca₂SiO₄ entspricht.

Herkömmlicherweise wird Belit-Zement, der neben C₂S die weiteren Klinkerphasen C₃S, C₃A und C₄AF enthält, durch Umwandlung von Calciumcarbonat CaCO₃ in Calciumoxid CaO (*gebrannter Kalk*) bei 900°C (so genanntes *Entsäuern*) und anschließendes, gemeinsames Sintern von Calciumoxid CaO und Siliziumdioxid SiO₂ bei 1250°C (so genannter *Klinkerprozess*) hergestellt. Nachteilig hieran sind die zunehmend unerwünschten Emissionen von Kohlendioxid CO₂ sowie die energetisch aufwändigen, hohen Prozesstemperaturen.

Aus H. Ishida, S. Yamazaki, K. Sasaki, Y. Okada, T. Mitsuda, α-Dicalcium Silicate Hydrate: Preparation, Decomposed Phase, and Its Hydration, J. Am. Ceram. Soc. 76, S. 1707-1712, 1993, ist bekannt, dass α-Dicalcium-Silikat-Hydrat α-C₂SH bei 200 °C durch eine zweisündige hydrothermale Behandlung von gebranntem Kalk CaO und Kieselsäure für Laborsynthesen (Reinheitsgrad p.a.) entsteht. Im Temperaturbereich von 390-490 °C wandelt sich α-C₂SH in verschiedene C₂S-Modifikationen um, die bei weiterer Erhitzung auf 920-960 °C in die α'_{L}-Phase übergehen und beim Abkühlen β-C₂S bilden. Nachteilig hieran ist die Verwendung von wegen ihrer hohen Reaktivität teuerer Kieselsäure.

Aus J.M. Butt, L.M. Raschkowski, D.M. Heiker, A.A. Meier und 0.I. Gratschewa, Die Bedingungen für die Bildung von Kalziumhydrosilikaten und deren Eigenschaften, Silikattechnik 12, S. 281-287, 1961, und T. Yano, K. Urabe, H. Ikawa, T. Teraushi, N Ishizawa und S. Udagawa, Structure of a-Dicalcium Silicate Hydrate, Acta. Cryst. C49, S. 1555-1559, 1993, ist bekannt, dass selbst bei Einsatz von gemahlenem Quarz die Reaktionsgeschwindigkeit so stark verlangsamt wird, dass erst nach mehreren Tagen oder Wochen ein messbarer Umsatz zu C₂S ermittelt werden kann.

In der ES 2 223 275 A1 sowie in A. Guerrero, S. Goñi, A. Macias, und M.P. Luxàn, Effect of the starting fly ash on the microstructure and mechanical properties of fly ash-belite cement mortars, Cement and Concrete Research 30, S. 553-559, 2000 wird basierend auf W. Jiang und D.M.Roy, Hydrothermal Processing of New Fly Ash Cement, Ceramic Bulletin 71, S. 642-647, 1992, ein alikalihaltiges hydraulisches Bindemittel aus α'_{L}-C₂S offenbart, das mittels thermischer Behandlung von Flugasche gewonnen wird. Nachteilig hieran ist der erforderliche Einsatz des teueren Flugaschetyps ASTM Klasse F, der sich durch einen hohen Gehalt (20-50 Gew.%) an CaO auszeichnet.

Ausgehend hiervon ist es die Aufgabe der vorliegenden Erfindung, ein Verfahren zur Herstellung von Belit-Bindemittel vorzuschlagen, das die genannten Nachteile und Einschränkungen nicht aufweist. Insbesondere soll Belit-Bindemittel bei niedrigen Temperaturen aus einem breiten Spektrum von Ausgangsstoffen (Rohstoffe oder Abfälle) hergestellt werden, wobei ganz oder teilweise auf die aufwändige Entsäuerung von CaCO₃ zu CaO verzichtet wird.

Diese Aufgabe wird durch die Verfahrensschritte des Patentanspruchs 1 gelöst. Die Unteransprüche beschreiben jeweils vorteilhafte Ausgestaltungen der Erfindung.

Das erfindungsgemäße Verfahren zur Herstellung von Belit-Bindemittel umfasst die Schritte a) bis c). Als Ausgangspunkt für Schritt a) wird ein Ausgangsmaterial, das Calciumoxid CaO und Siliziumdioxid SiO₂ im molaren Ca:Si-Verhältnis zwischen 2,5:1 und 1,5:1, bevorzugt zwischen 2,1:1 und 1,9:1, d. h. annähernd 2, enthält, ggf. zerkleinert und in einen Behälter (Reaktor) eingebracht und hiermit bereitgestellt.

Das eingesetzte Ausgangsmaterial wird vor der weiteren Behandlung in der Regel bezüglich Korngröße, Korngrößenverteilung, chemischer Zusammensetzung durch mechanische oder thermische Behandlung sowie ggf. durch Zugabe weiterer Reaktionspartner wie Ca- oder Si-haltiger Feststoffe zur Einstellung des erforderlichen Ca:Si-Verhältnisses zwischen 2,5:1 und 1,5:1, bevorzugt zwischen 2,1:1 und 1,9:1, d. h. annähernd 2, oder reaktionsbeeinflussender Stoffe wie z.B. Wasser optimiert.

In einer besonders bevorzugten Ausgestaltung wird dem Ausgangsmaterial vor, während oder nach Schritt a), spätestens jedoch vor oder während Schritt b) Wasser zugegeben, so dass hieraus eine Suspension oder je nach Verfahrensführung eine Lösung entsteht.

Als Ausgangsmaterialien werden Primär- oder Sekundärrohstoffe eingesetzt, die bereits das gewünschte Ca:Si-Verhältnis aufweisen oder deren Ca:Si-Verhältnis mittels der unten beschriebenen Verfahren entsprechend eingestellt wird.

In einer bevorzugten Ausgestaltung eignen sich hierfür Betone, auch Altbetone, Mörtel oder hieraus hergestellte Brechsande. Diese Materialien enthalten Zementstein, bevorzugt mindestens 20 Gew.% Zementstein, besonders bevorzugt mindestens 30 Gew.% Zementstein.

In einer bevorzugten Ausgestaltung wird Feinkornmaterial aus der Betonaufbereitung als Ausgangsmaterial gewählt, dessen Körnung vorzugsweise höchstens 4 mm beträgt. Hierfür kommen insbesondere die feineren Kornfraktionen aus der Wiederaufbereitung von zementhaltigen Bindemitteln in Baustoffen wie Altbetonen und -zementen zum Einsatz. Dort wird das Grobmaterial, d.h. Zuschläge wie Sand, Kies und ähnliches möglichst gut vom Bindemittel z.B. durch mechanisches Brechen getrennt. Die Zuschläge werden wieder verwendet; das in den feineren Kornfraktionen angereicherte Bindemittel, das bisher in Form der so genannten Brechsandfraktion deponiert werden muss, eignet sich bevorzugt als Ausgangsmaterial für das vorliegende Verfahren.

In einer weiteren Ausgestaltung werden Quarze, Sande oder Kiese als Ausgangsmaterial eingesetzt. Während in der Bodenkunde unter Sand ein Material mit einer Körnung unterhalb von 2 mm verstanden wird, wird hier die in der Bautechnik übliche Definition mit einer Körnung von höchstens 4 mm verwendet. Bevorzugt sind Sande oder Kiese mit einem Gehalt an SiO₂ größer als 30 Gew.%, besonders bevorzugt größer als 50 Gew.%. Besonders bevorzugt sind Ausgangsmaterialien, die neben den genannten Mengen an SiO₂ auch noch CaO enthalten, so dass z. B. die Zusammensetzung eines Kalkmergels erreicht wird und keine weitere Anpassung der chemischen Zusammensetzung notwendig ist. Ist das gewünschte Ca:Si-Verhältnis nicht vorhanden, so müssen diese Materialien mit einem Calciumoxid oder -hydroxid versetzt werden. Hierfür eignen sich,beispielsweise Portlandit Ca(OH)₂ oder gebrannter Kalk CaO.

In einer weiteren Ausgestaltung werden Schlacken z.B. aus der Müllverbrennung oder aus Hochöfen, beliebige Flugaschen (nicht nur die aus der ES 2 223 275 A1 bekannten Flugasche), Traße, Tonminerale oder Gläser als Ausgangsmaterial eingesetzt. Diese Art von Ausgangsmaterialien benötigen zur Einstellung des gewünschten Ca:Si-Verhältnisses ebenfalls eine Calciumquelle wie Portlandit Ca(OH)₂ oder gebrannter Kalk CaO.

In einer besonderen Ausgestaltung wird das Ausgangsmaterial mit einer alkalischen Substanz, insbesondere einem wässrigen Alkalimetallhydroxid wie z.B. Natronlauge NaOH, besser Kalilauge KOH oder auch wässrigem Lithiumhydroxid LiOH versetzt.

Diese Zugabe einer alkalischen Substanz (*Alkaliaktivierung*) dient der Auflösung der Siliziumquelle wie Quarz, Kieselsäure, Gläser, Schlacken, usw., wodurch das Ca:Si-Verhältnis reaktiver, wird, d.h. näher an den gewünschten Wert von etwa 2:1 rückt. Langsam reagierende Ausgangsmaterialien werden durch Alkaliaktivierung in ihrer Reaktion beschleunigt, so dass sich in der Lösung in kurzer Zeit ein reaktives Ca:Si-Verhältnis einstellt.

Das ggf. wie beschrieben vorbehandelte Ausgangsmaterial wird in Schritt a) nun mit Kristallisationskeimen, die α-Dicalcium-Silikat-Hydrat α-C₂SH (α-C₂SH-Keime) enthalten, versetzt, also geimpft. Hierbei wird dem Ausgangsmaterial bevorzugt weniger als 2 Gew.% α-C₂SH, besonders bevorzugt weniger als 1 Gew.% α-C₂SH als Kristallisationskeime zugefügt.

In einer bevorzugten Ausgestaltung dieses Verfahrens wird ein geringer Teil des in Schritt b) gebildeten Zwischenprodukts, das überwiegend aus α-Dicalcium-Silikat-Hydrat α-C₂SH besteht, als α-C₂SH-Keime entnommen und dem Ausgangsmaterial zugefügt.

Das so modifizierte (geimpfte) Ausgangsmaterial wird anschließend in Schritt b) einer hydrothermalen Behandlung bei einer Temperatur zwischen 100 °C und 300 °C, bevorzugt zwischen 150 °C und 250 °C unterzogen. Hierdurch wird das entsprechend geimpfte Ausgangsmaterial überwiegend in das Zwischenprodukt α-Dicalcium-Silikat-Hydrat α-C₂SH umgewandelt. Ein geringer Teil des so gebildeten Zwischenprodukts wird vorzugsweise dem Verfahren entnommen und neuem Ausgangsmaterial als Kristallisationskeim zugefügt.

Im hierauf folgenden Schritt c) wird das so hergestellte Zwischenprodukt bei einer Temperatur zwischen 500 °C und 1000 °C, bevorzugt zwischen 700 °C und 900 °C umgesetzt. Nach dem Abkühlen bildet sich das gewünschte Produkt, das hydraulisch reaktive C₂S-Modifikationen enthält und als *Belit-Bindemittel* bezeichnet wird. Diese thermische Entwässerung von α-C₂SH zu Belit-Bindemittel erfolgt insbesondere unter der Vermeidung unerwünschter Nebenreaktionen wie z.B. der Entstehung von Freikalk. Das so hergestellte Belit-Bindemittel kann dann dem Behälter (Reaktor) entnommen werden.

Im Folgenden werden am Beispiel von Zementstein verschiedene Ausgestaltungen des erfindungsgemäßen Verfahrens erläutert. Mit entsprechenden Anpassungen können diese Ausgestaltungen auch mit anderen Ausgangsmaterialien durchgeführt werden.

In einer Ausgestaltung des Verfahrens findet die hydrothermale Behandlung, d. h. die Zugabe von Wasser und Erhitzen auf eine Temperatur bis zu 300°C, innerhalb eines einzigen Druckbehälters statt. Nach der Auflösung des Ausgangsmaterials scheiden sich nach Zugabe der Kristallisationskeime (α-C₂SH-Keime) das Zwischenprodukt α-C₂SH ab, das anschließend einer Temperaturbehandlung bei 500 bis 1000°C unterzogen wird, wodurch es sich in Belit-Bindemittel umwandelt.

In einer alternativen Verfahrensausgestaltung werden die beiden Reaktionen, d.h. Auflösung des Ausgangsmaterials und Abscheidung des Zwischenprodukts, durch eine Membran, die lediglich den Transport der Lösung zulässt, räumlich voneinander getrennt, um das Zwischenprodukt α-C₂S einfacher vom Ausgangsmaterial trennen zu können.

In einer weiteren bevorzugten Verfahrensausgestaltung erfolgt die Trennung der beiden genannten Reaktionen in zwei verschiedenen Behältern, die durch einen gepumpten Lösungsmittelkreislauf verbunden sind. Hierdurch lassen sich die Reaktionsparameter Temperatur, Druck usw. so einstellen, dass die beiden Teilreaktionen jeweils unter optimierten Bedingungen ablaufen können. Dies ermöglicht eine optimierte Temperaturführung, da z.B. bekannt ist, dass die Löslichkeit von CaO mit zunehmender Temperatur abnimmt, während die Löslichkeit von SiO₂ mit zunehmender Temperatur zunimmt. Damit lässt sich das reaktive Ca/Si-Verhältnis in der Lösung in gewissen Grenzen steuern.

In einer weiteren bevorzugten Verfahrensausgestaltung wird der Reaktionsraum für die Auflösung des Ausgangsmaterials druckfrei, d.h. offen bzw. unter Atmosphärendruck, betrieben. Dies wird durch eine Reduktion der Temperatur auf Werte zwischen 20°C und 100°C erreicht, wodurch sich auch die zuzuführende Energie und der apparatetechnische Aufwand weiter verringern.

Hierfür muss nur noch der Reaktionsraum für die Abscheidung des Produkts sowie eine vergleichsweise geringe Menge an Lösungsmittel aufgeheizt und unter Druck gehalten bzw. umgepumpt werden. Darüber hinaus kann bei einer entsprechenden Führung des Verfahrens weniger aufwändig vorbereitetes Ausgangsmaterial z. B. unzerkleinert mit ursprünglicher Korngröße oder mit erhöhtem Zuschlagsanteil eingesetzt werden. Die Separation von Zuschlag und neuem Bindemittel erfolgt dann durch selektive Auflösung und hiervon räumlich getrennte Kristallisation.

Die druckfreie Durchführung der Auflösungsreaktion unter Vermeidung eines unnötigen Energieaufwandes und der Möglichkeit auf eine zusätzliche Vorbereitung der Ausgangsmaterialien verzichten zu können, erlaubt eine semi-kontinuierliche Reaktionsführung, da lediglich der Druckbehälter zur Abscheidung von α-C₂SH im Batch-Betrieb betrieben werden muss.

Das erfindungsgemäße Verfahren weist eine Reihe von erheblichen Vorteilen auf. Es ermöglicht die Wiederverwertung von ansonsten zu deponierenden Reststoffen wie z. B. der Brechsandfraktion. Dies führt zum einen zur Einsparung von Rohstoffen durch den Einsatz von Reststoffen. Zum anderen wird hierdurch Energie eingespart, da das erfindungsgemäße Verfahren bei niedrigeren Temperaturen und mit einem geringeren Einsatz an mechanischer Energie arbeitet. Außerdem führt dieses Verfahren zur Reduktion von Kohlendioxid-Emissionen im Baustoffbereich, da mit Zementstein ein Material eingesetzt wird, das nicht vorher decarbonatisiertes werden muss und so ein verringerter Energieeinsatz notwendig ist. Durch den Einsatz von α-C₂SH-Keimen wird im Vergleich zu bekannten Verfahren die Reaktionszeit erheblich verkürzt bzw. ein höherer Umsatz erreicht, was technische wie wirtschaftliche Vorteile bietet. Gleichzeitig kann mit,dem erfindungsgemäßen Verfahren ein breites Spektrum an Ausgangsmaterialien ein- und umgesetzt werden.

Die Erfindung wird im Folgenden anhand von drei Ausführungsbeispielen im Labor-Maßstab erläutert.

Als Ausgangsmaterial für das erste Ausführungsbeispiel diente Altbeton der Korngruppe kleiner als 4 mm. Die Reaktion von CaO und SiO₂ zu α-C₂SH erfolgte in einem Autoklaven mit einem maximalen Fassungsvermögen von 70 ml. Jeweils 10 g Edukt wurden mit 4 g Wasser und 0,05 g α-C₂SH-Keimen im Autoklaven für 6 Stunden bei 200°C getempert. Dann wurde das Zwischenprodukt α-C₂SH bei 105 °C bis zur Gewichtskonstanz getrocknet. Dessen Reaktivität wurde durch Mahlen von jeweils 10 g des abgekühlten Materials für 20 Sekunden in einer Scheibenschwingmühle erhöht. Die Umwandlung des α-C₂SH in β-C₂S erfolgte durch Tempern des Zwischenproduktes (Inhalt eines Autoklaven pro Tiegel) über 2 Stunden bei 900°C und anschließendes Abkühlen.

In einem zweiten Ausführungsbeispiel wurde Altbeton der Fraktion < 4 mm nach einer Ermittlung und Quantifizierung des Phasenbestandes zusätzlich mit Portlandit Ca(OH)₂ im Gewichtsverhältnis Portlandit/Altbeton = 1,45 vermischt und die Mischung homogenisiert. Dadurch wurde ein optimales Kalkmodul (CaO/SiO₂) von 2 für die gesamte Mischung eingestellt. 3,5g der Mischung wurden mit 5 ml 1M NaOH und 30 ml Wasser in einem Autoklaven (Fassungsvermögen 70 ml) für 8 Stunden bei 200°C behandelt. Dadurch wurde ein nahezu vollständiger Umsatz des Edukts in α-C₂SH erzielt. Die abschließende Trocknung und Umwandlung des α-C₂SH in β-C₂S erfolgte wie im ersten Ausführungsbeispiel.

In einem dritten Ausführungsbeispiel wurden 1,03g Quarzsand und 2,55g Ca(OH)₂ im molaren Verhältnis CaO/SiO₂ = 2,0 vermischt. Dazu wurden zur *Alkaliaktivierung* 30 ml Wasser und 5 ml 1M NaOH zugegeben. Die Edukte wurden in einem Autoklaven (Fassungsvermögen 70 ml) für 22 Stunden bei 200°C behandelt und anschließend bei 105°C getrocknet.

Der vollständige Umsatz des Edukts in α-C₂SH wurde röntgenographisch festgestellt. Die abschließende Trocknung und Umwandlung des α-C₂SH in β-C₂S erfolgte ebenfalls wie im ersten Ausführungsbeispiel.

## Patentansprüche

1. Verfahren zur Herstellung von Belit-Bindemittel, umfassend die Schritte:
a) Impfen eines Ausgangsmaterials, das Calciumoxid CaO und Siliziumdioxid SiO₂ im molaren Ca:Si-Verhältnis zwischen 2,5:1 und 1,5:1 enthält, mit Kristallisationskeimen aus α-Dicalcium-Silikat-Hydrat α-C₂SH,
b) Hydrothermales Behandeln des so geimpften Ausgangsmaterials bei einer Temperatur zwischen 100 und 300 °C, wodurch sich dieses überwiegend in das Zwischenprodukt α-Dicalcium-Silikat-Hydrat α-C₂SH umwandelt,
c) Trocknen des Zwischenprodukts bei einer Temperatur zwischen 500 und 1000 °C und anschließendes Abkühlen, wodurch sich das Belit-Bindemittel abscheidet.

2. Verfahren nach Anspruch 1, wobei dem Ausgangsmaterial vor, während oder nach Schritt a), spätestens jedoch vor oder während Schritt b) Wasser zugegeben wird, so dass hieraus eine Suspension oder eine Lösung entsteht.

3. Verfahren nach Anspruch 1 oder 2, wobei ein Ausgangsmaterial eingesetzt wird, das Zementstein enthält.

4. Verfahren nach Anspruch 3, wobei Beton, Altbeton, Mörtel oder hieraus hergestellter Brechsand als Ausgangsmaterial eingesetzt wird.

5. Verfahren nach Anspruch 4, wobei ein Ausgangsmaterial, das eine Körnung von höchstens 4 mm aufweist, eingesetzt wird.

6. Verfahren nach einem der Ansprüche 1 bis 5, wobei das Ausgangsmaterial mit einem Calciumoxid oder Calciumhydroxid versetzt wird.

7. Verfahren nach Anspruch 6, wobei Quarz, Sand, Kies, Glas, Schlacke oder Flugasche als Ausgangsmaterial eingesetzt wird.

8. Verfahren nach einem der Ansprüche 1 bis 7, wobei die Siliziumquelle im Ausgangsmaterial durch Zugabe einer alkalischen Substanz aufgelöst wird.

9. Verfahren nach einem der Ansprüche 1 bis 8, wobei das Ausgangsmaterial mit weniger als 2 Gew.% Kristallisationskeimen geimpft wird.

10. Verfahren nach einem der Ansprüche 1 bis 9, wobei ein Teil des in Schritt b) gebildeten Zwischenprodukts dem Verfahren entnommen und damit weiteres Ausgangsmaterial geimpft wird.

11. Verfahren nach einem der Ansprüche 1 bis 10, wobei das gesamte Verfahren in einem Druckbehälter ausgeführt wird.

12. Verfahren nach einem der Ansprüche 2 bis 11, wobei die Auflösung des Ausgangsmaterials und die Abscheidung des Zwischenprodukts in getrennten Reaktionsräumen erfolgen.

13. Verfahren nach Anspruch 12, wobei die Reaktionsräume durch eine Membran, die nur einen Flüssigkeitstransport zulässt, getrennt werden.

14. Verfahren nach Anspruch 12, wobei zwei verschiedene Behälter, die durch einen gepumpten Lösungsmittelkreislauf miteinander verbunden sind, als Reaktionsräume dienen.

15. Verfahren nach Anspruch 14, wobei die Auflösung des Ausgangsmaterials in einem druckfreien Reaktionsraum erfolgt.

## Claims

1. Method for producing a belite-based binding agent, said method comprising the steps:
a) reacting a starting material, consisting of calcium oxide CaO and silicon oxide SiO₂ at the Ca:Si molar ratio of between 2.5:1 and 1.5:1, with crystallisation seeds from α-dicalcium silicate hydrate α-C₂SH,
b) treating the thus reacted starting material hydrothermally at a temperature of between 100 and 300°C, said starting material thereby being converted predominantly into the intermediate product α-dicalcium silicate hydrate α-C₂SH,
c) drying the intermediate product at a temperature of between 500 and 1000°C and subsequently cooling it, thereby separating off the belite-based binding agent.

2. Method according to claim 1, wherein water is added to the starting material before, during or after step a), however no later that before of during step b), so that a suspension or a solution is created.

3. Method according to claim 1 or 2, wherein a starting material that contains hardened cement paste is used.

4. Method according to claim 3, wherein concrete, old concrete, mortar or crushed sand produced therefrom is used as a starting material.

5. Method according claim 4, wherein a starting material with a maximum grain size of 4 mm is used.

6. Method according to one of claims 1 to 5, wherein the starting material is mixed with a calcium oxide or calcium hydroxide.

7. Method according to claim 6, wherein quartz, sand, gravel, glass, cinders or fly ash is used as the starting material.

8. Method according to one of claims 1 to 7, wherein the silicon source in the starting material is dissolved by adding an alkaline substance.

9. Method according to one of claims 1 to 8, wherein the starting material is reacted with less than 2% by weight crystallisation seeds.

10. Method according to one of claims 1 to 9, wherein a part of the intermediate product formed in step b) is removed from the method and additional starting material is reacted therewith.

11. Method according to one of claims 1 to 10, wherein the entire method is carried out in a pressure container.

12. Method according to one of claims 2 to 11, wherein the dissolving of the starting material and the separating of the intermediate product are effected in separate reaction chambers.

13. Method according to claim 12, wherein the reaction chambers are separated by a diaphragm, which only allows liquid through.

14. Method according to claim 12, wherein two different containers, which are interconnected by means of a pumped solvent circuit, serve as reaction chambers.

15. Method according to claim 14, wherein the dissolving of the starting material is effected in a pressureless reaction chamber.

## Revendications

1. Procédé d'obtention d'un liant à base de belite comportant les étapes suivantes :
a) inoculation d'un matériau de départ renfermant de l'oxyde de calcium CaO et du dioxyde de silicium SiO₂ dans un rapport molaire Ca : Si compris entre 2,5 :1 et 1,5 :1 avec des germes de cristallisation en α- hydrosilicate dicalcique, α-C₂SH,
b) traitement hydrothermal du matériau de départ ainsi inoculé à une température comprise entre 100°C et 300°C de sorte qu'il se transforme principalement en produit intermédiaire α- hydrosilicate dicalcique α-C₂SH,
c) séchage du produit intermédiaire à une température comprise entre 500°C et 1000°C suivi d'un refroidissement de sorte que le liant à base de belite se sépare.

2. Procédé conforme à la revendication 1,
selon lequel
avant, pendant ou après l'étape a) mais au plus tard toutefois avant ou pendant l'étape b), on ajoute de l'eau de façon à obtenir une suspension ou une solution.

3. Procédé conforme à la revendication 1 ou 2,
selon lequel
on met en oeuvre un matériau de départ renfermant de la pâte de ciment ayant fait prise.

4. Procédé conforme à la revendication 3,
selon lequel
on met en oeuvre en tant que matériau de départ, du béton, du béton vieilli, du mortier ou du sable concassé obtenu à partir de ces éléments.

5. Procédé conforme à la revendication 4,
selon lequel
on met en oeuvre un matériau de départ ayant une granulométrie d'au maximum 4 mm.

6. Procédé conforme à l'une des revendications 1 à 5,
selon lequel
on mélange le matériau de départ avec de l'oxyde ou de l'hydroxyde de calcium.

7. Procédé conforme à la revendication 6,
selon lequel
on met en oeuvre en tant que matériau de départ du quartz, du sable, du gravier, du verre, des scories ou des cendres volantes.

8. Procédé conforme à l'une des revendications 1 à 7,
selon lequel
la source de silicium présente dans le matériau de départ est dissoute par addition d'une substance alcaline.

9. Procédé conforme à l'une des revendications 1 à 8,
selon lequel
le matériau de départ est inoculé avec moins de 2 % en poids de germes de cristallisation.

10. Procédé conforme à l'une des revendications 1 à 9,
selon lequel
une partie du produit intermédiaire formé à l'étape b) est soutirée du procédé pour inoculer un autre matériau de départ.

11. Procédé conforme à l'une des revendications 1 à 10,
selon lequel
la totalité du procédé est mise en oeuvre dans un réacteur sous pression.

12. Procédé conforme à l'une des revendications 2 à 11,
selon lequel
la dissolution du matériau de départ et la séparation du produit intermédiaire s'effectuent dans des chambres de réaction séparées.

13. Procédé conforme à la revendication 12,
selon lequel
les chambres de réaction sont séparées par une membrane qui ne permet qu'un passage de liquide.

14. Procédé conforme à la revendication 12,
selon lequel
deux réacteurs différents, reliés par un circuit de solvant pompé, font office de chambres de réaction.

15. Procédé conforme à la revendication 14,
selon lequel
la dissolution du matériau de départ s'effectue dans une chambre de réaction exempte de pression.
